# FASCICULE DE BREVET EUROPEEN

(11) **EP 2 665 629 B1**
(45) Date de publication et mention de la délivrance du brevet: **15.07.2015**
(21) Numéro de dépôt: 12700966.0
(22) Date de dépôt: 16.01.2012
(51) Int. Cl.: B60S 1/04

(54) **DISPOSITIF D'ESSUIE-GLACE POUR VEHICULE AUTOMOBILE**
SCHEIBENWISCHERVORRICHTUNG FÜR KRAFTFAHRZEUGE
WINDSHIELD WIPER DEVICE FOR MOTOR VEHICLE

(30) Priorité: 17.01.2011 FR 1150358
(43) Date de publication de la demande: 27.11.2013
(73) Titulaire: Valeo Systèmes d'Essuyage, 78321 Le Mesnil Saint Denis (FR)
(72) Inventeur: VALLIERE, Jérôme, F-86220 Les Ormes (FR)
(74) Mandataire: Léveillé, Christophe
(86) Numéro de dépôt international: PCT/EP2012/050553
(87) Numéro de publication internationale: WO 2012/098072

(56) Documents cités:
- WO-A1-2005/080156
- DE-A1-102006 032 869
- US-A1- 2004 091 305

## Description

L'invention concerne un dispositif d'essuie-glace pour véhicule automobile.

Un tel dispositif d'essuie-glace est décrit dans le brevet EP 1 718 507. Ce dispositif d'essuie-glace comporte au moins trois liaisons éloignées l'une de l'autre, afin d'effectuer un montage sans vissage du système d'essuie-glace ou d'un support de ce dispositif sur la carrosserie du véhicule automobile. Ces liaisons sont respectivement constituées d'un élément de fixation pouvant être poussé dans une ouverture de réception de la carrosserie et comprenant une douille en matériau déformable de type caoutchouc pouvant être introduite dans cette ouverture. Cette douille, qui forme un amortisseur, est enfilée sur un doigt de fixation obtenu de moulage sur le dispositif d'essuie-glace et y est bloquée en translation par une nervure annulaire portée par le doigt de fixation.

Selon ce document, la douille est de section transversale externe circulaire et comporte un alésage interne de section également circulaire venant recevoir le doigt de fixation qui est de section transversale également circulaire.

Sur certains véhicules, il est prévu d'installer une telle douille mais de section transversale externe oblongue, l'ouverture correspondante dans la carrosserie étant de cette forme.

Dans ce cas, il est nécessaire d'assurer un montage et une retenue de la douille sur le doigt de fixation dans une position précise bloquée en rotation, compte-tenu de la forme et de la position de l'ouverture sur la carrosserie. Il est donc réalisé une section transversale spécifique de l'alésage interne de la douille et donc du doigt de fixation. Une forme connue de cette section est en H.

Actuellement, cette différence de forme de l'ouverture dans la carrosserie nécessite donc une constitution différente du doigt de fixation et donc un dispositif d'essuie-glace différent, le doigt de fixation étant obtenu de moulage avec ce dispositif portant un moteur et destiné à recevoir le balai d'essuie-glace.

L'objet de l'invention est de standardiser un tel dispositif d'essuie-glace, de sorte que son doigt de fixation puisse recevoir tout autant une douille de section transversale externe circulaire qu'une douille de section transversale externe oblongue.

Pour ce faire, l'invention propose un dispositif d'essuie-glace comportant au moins une liaison de montage sur la carrosserie d'un véhicule automobile, cette liaison étant constituée d'un élément de fixation pouvant être poussé dans une ouverture de réception de la carrosserie et comprenant une douille en matériau déformable de type caoutchouc pouvant être introduite dans cette ouverture et comportant un alésage recevant l'extrémité libre d'un doigt de fixation porté par le dispositif d'essuie-glace, caractérisé en ce que la section transversale externe dudit doigt de fixation est en forme de croix et la forme dudit alésage est de forme complémentaire, la longueur des branches perpendiculaires de ladite croix étant au moins partiellement différente, de façon à assurer un détrompage et un montage de la douille sur le doigt de fixation dans une position précise bloquée en rotation.

Cette forme en croix permet de coopérer avec un alésage également standard de la douille, que celle-ci soit de section transversale externe circulaire ou oblongue. Cette section complémentaire est dimensionnée en fonction des dimensions externes de la douille, de façon optimale pour assurer une suffisante résistance de la matière autour de cet alésage.

Une telle forme du doigt de fixation assure la possibilité de mise en place d'une douille de section oblongue ou circulaire mais égalament permet d'obtenir une bonne rigidité de fixation dans le système global lorsque la section de la douille est oblongue.

De par les longueurs différentes des branches de Ima section en croix du doigt de fixation, il est obtenu un blocage en rotation de la douille, indispensable lorsque cette dernière est de section transversale externe oblongue.

Selon un mode de réalisation préféré, la longueur de deux branches alignées de ladite croix augmente à l'extrémité opposée à ladite extrémité libre, de façon à former des portions de détrompage.

Ces deux portions assure une fonction efficace de détrompage, indispensable lorsque la douille est de section transversale externe oblongue et doit donc être bloquée en rotation dans une position précise, afin de correspondre avec la forme oblongue de l'ouverture de la carrosserie.

De préférence, la longueur des branches perpendiculaires de ladite croix est différente sur toute la longueur dudit doigt de fixation.

Avantageusement, le rapport de longueur des branches perpendiculaires de ladite croix est égal à environ ½.

De préférence, ledit alésage de ladite douille est de section transversal cylindrique de diamètre sensiblement égal à la distance entre les extrémités des deux branches de plus petite longueur, associée à une première fente de longueur sensiblement égale à la distance entre les extrémités des deux branches de plus grande longueur.

Cette section spécifique de l'alésage de la douille permet un montage de cette dernière sur le doigt de fixation de façon plus facile, que s'il était également de section en forme de croix.

Ledit alésage comporte de préférence une seconde fente perpendiculaire à la première fente et de longueur sensiblement égale à la distance entre les extrémités des deux portions de détrompage des branches de plus grande longueur.

L'emboîtement de cette seconde fente avec les portions de détrompage du doigt de fixation assure un positionnement relatif correct de la douille et du doigt de fixation, afin de correspondre avec la forme oblongue de l'ouverture de la carrosserie.

Ladite extrémité libre du doigt de fixation comporte avantageusement une nervure annulaire de blocage en translation de ladite douille.

L'invention est décrite ci-après plus en détail à l'aide de figures représentant uniquement un mode de réalisation préféré de l'invention.
Les figures 1 et 2 sont des vues en perspective d'un dispositif d'essuie-glace équipé pour la figure 1 d'une douille section transversale externe circulaire et pour la figure 2 d'une douille section transversale externe oblongue.
Les figures 3 et 4 sont des vues en perspective d'un dispositif d'essuie-glace avant montage pour la figure 3 d'une douille section transversale externe circulaire et pour la figure 4 d'une douille section transversale externe oblongue.
Les figures 5 et 6 sont des vues de détail, en perspective et en coupe, d'un dispositif d'essuie-glace avant montage d'une douille.
Les figures 7 sont des vues frontale, de côté et en coupe transversale, d'une douille section transversale externe circulaire.
Les figures 8 sont des vues frontale, de côté et en coupe transversale, d'une douille section transversale externe oblongue.

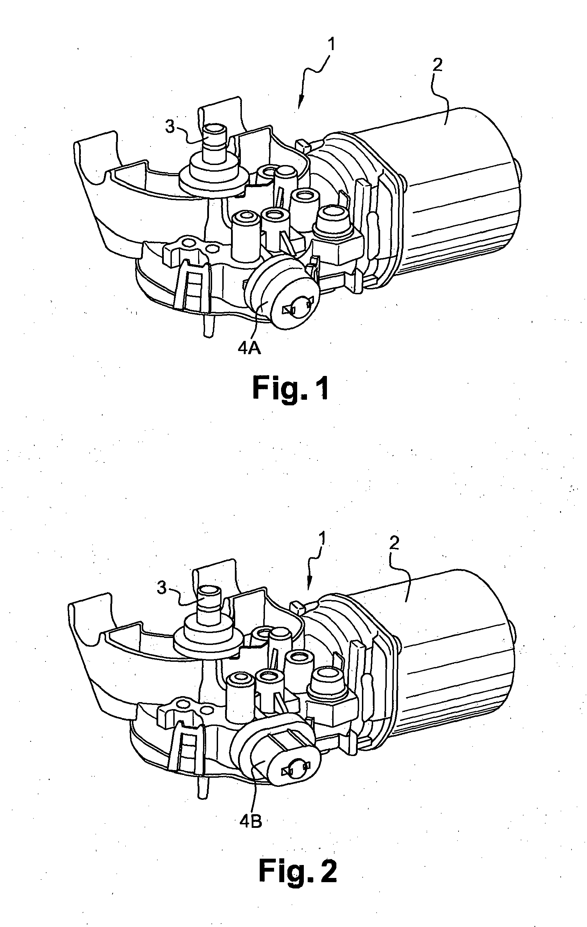

Les figures 1 et 2 représentent un dispositif d'essuie-glace 1 portant un moteur 2 et destiné à recevoir le balai d'essuie-glace au moyen d'un pivot 3. Ce dispositif est équipé pour la figure 1 d'une douille section transversale externe circulaire 4A et pour la figure 2 d'une douille section transversale externe oblongue 4B. Cette douille 4A, 4B en matériau déformable de type caoutchouc est destinée à être poussée dans une ouverture de réception correspondante de la carrosserie.

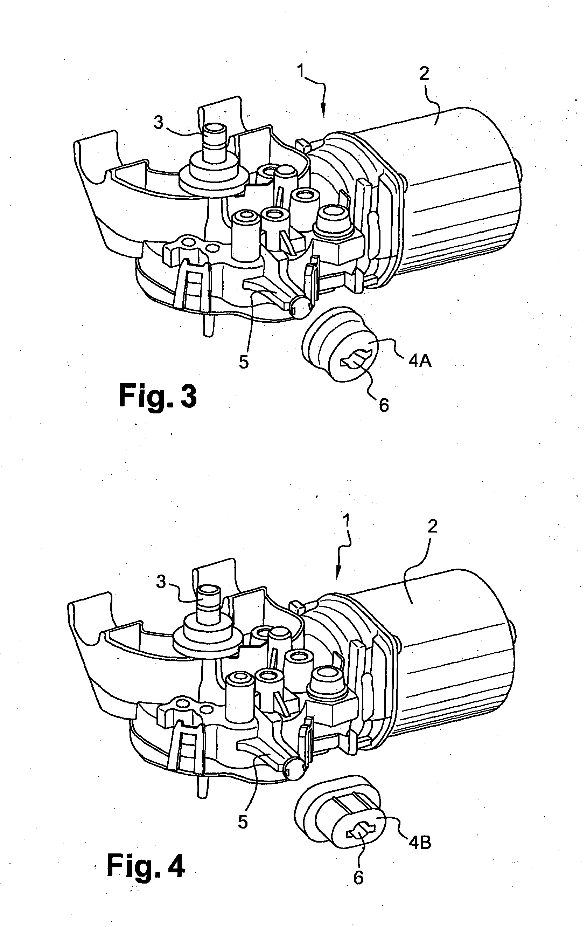

Comme visible sur les figures 3 et 4, cette douille 4A, 4B comporte un alésage 6 recevant l'extrémité libre d'un doigt de fixation 5 obtenu de moulage sur le dispositif d'essuie-glace 1.

Doigt de fixation et douille forme donc une liaison de montage sur la carrosserie d'un véhicule automobile.

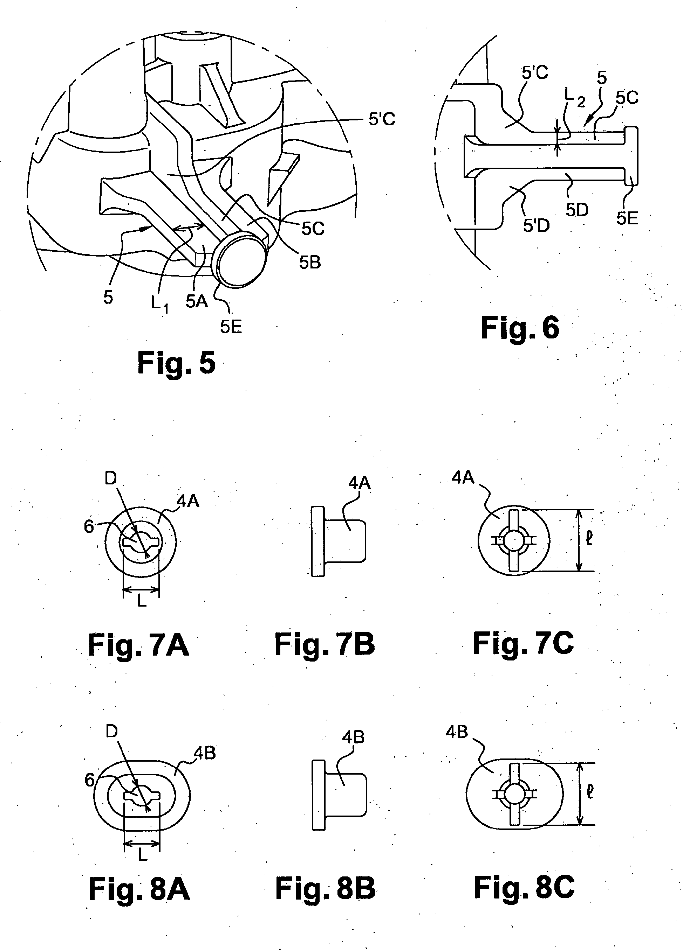

Comme mieux visible sur les figures 5 et 6, la section transversale externe du doigt de fixation 5 est en forme de croix, la forme de l'alésage de la douille étant de forme complémentaire, la longueur des branches perpendiculaires de cette croix étant au moins partiellement différente, de façon à assurer un détrompage et un montage de la douille sur le doigt de fixation dans une position précise bloquée en rotation.

En d'autres termes, vues en section transversale, les branches alignées 5A, 5B sont de longueur L₁ différente de celle L₂ des branches perpendiculaires 5C, 5D à ces dernières.

De préférence, le rapport de longueur des branches perpendiculaires L₂/L₁ de ladite croix est égal à environ ½.

Afin d'augmenter ce blocage en rotation et surtout ce détrompage, compte-tenu du caractère déformable de la douille destinée à être montée sur le doigt de fixation 5, la longueur des branches 5C, 5D de plus petite longueur augmente à l'extrémité opposée à l'extrémité libre du doigt de fixation 5, pour former des portions de détrompage 5'C,5'D, la longueur des branches 5A, 5B de plus grande longueur restant constante.

Selon ce mode de réalisation préféré, la longueur des branches perpendiculaires de la section en croix est différente sur toute la longueur du doigt de fixation 5.

L'extrémité libre du doigt de fixation 5 comporte également une nervure annulaire 5E de blocage en translation de la douille.

Les figures 7 et 8 sont des vues frontale, de côté et en coupe transversale, d'une douille de section transversale externe circulaire 4A ou oblongue 4B, qui peuvent toutes deux être montées sur le dispositif d'essuie-glace 1, grâce à l'agencement de doigt de fixation 5 précédemment décrit.

Ces douilles comportent un alésage de réception du doigt de fixation 5 qui est de section transversale cylindrique de diamètre D sensiblement égal à la distance entre les extrémités des deux branches 5C, 5D de plus petite longueur L₂, associée à une première fente de longueur L sensiblement égale à la distance entre les extrémités des deux branches 5A, 5B de plus grande longueur L₁.

A leur extrémité tournée vers le dispositif 1, comme visible sur la vue en coupe des figures 7C et 8C, cet alésage comporte une seconde fente perpendiculaire à la première fente et de longueur l sensiblement égale à la distance entre les extrémités des deux portions de détrompage 5'C, 5'D des branches de plus grande longueur L₁.

## Revendications

1. Dispositif d'essuie-glace (1) comportant au moins une liaison de montage sur la carrosserie d'un véhicule automobile, cette liaison étant constituée d'un élément de fixation pouvant être poussé dans une ouverture de réception de la carrosserie et comprenant une douille (4A, 4B) en matériau déformable de type caoutchouc pouvant être introduite dans cette ouverture et comportant un alésage (6) recevant l'extrémité libre d'un doigt de fixation (5) porté par le dispositif d'essuie-glace, **caractérisé en ce que** la section transversale externe dudit doigt de fixation (5) est en forme de croix et la forme dudit alésage (6) est de forme complémentaire, la longueur des branches perpendiculaires (5A à 5D) de ladite croix étant au moins partiellement différente, de façon à assurer un détrompage et un montage de la douille sur le doigt de fixation dans une position précise bloquée en rotation.

2. Dispositif selon la revendication 1, **caractérisé en ce que** la longueur de deux branches alignées (5C, 5D) de ladite croix augmente à l'extrémité opposée à ladite extrémité libre, de façon à former des portions de détrompage (5'C, 5'D).

3. Dispositif selon la revendication 1 ou 2, **caractérisé en ce que** la longueur (L₁, L₂) des branches perpendiculaires de ladite croix est différente sur toute la longueur dudit doigt de fixation.

4. Dispositif selon la revendication précédente, **caractérisé en ce que** le rapport de longueur (L₂/L₁) des branches perpendiculaires de ladite croix est égal à environ ½.

5. Dispositif selon la revendication 3 ou 4, **caractérisé en ce que** ledit alésage (6) de ladite douille est de section transversale cylindrique de diamètre sensiblement égal à la distance entre les extrémité des deux branches (5C, 5D) de plus petite longueur (L₂), associée à une première fente de longueur (L) sensiblement égale à la distance entre les extrémités des deux branches (5A, 5B) de plus grande longueur (L₁).

6. Dispositif selon la revendication précédente, **caractérisé en ce que** ledit alésage (6) comporte une seconde fente perpendiculaire à la première fente et de longueur (l) sensiblement égale à la distance entre les extrémités des deux portions de détrompage (5'C, 5'D) des branches de plus grande longueur.

7. Dispositif selon l'une des revendications précédentes, **caractérisé en ce que** ladite extrémité libre du doigt de fixation (5) comporte une nervure annulaire (5E) de blocage en translation de ladite douille (4A, 4B).

## Patentansprüche

1. Scheibenwischvorrichtung (1), umfassend mindestens eine Montageverbindung an der Karosserie eines Kraftfahrzeugs, wobei diese Verbindung aus einem Befestigungselement gebildet ist, das in eine Aufnahmeöffnung der Karosserie geschoben werden kann und eine Hülse (4A, 4B) aus einem gummiartigen, verformbaren Material aufweist, die in diese Öffnung eingeführt werden kann und eine Bohrung (6) aufweist, die das freie Ende eines Befestigungsfingers (5) aufnimmt, der von der Scheibenwischvorrichtung getragen ist, **dadurch gekennzeichnet, dass** der äußere Querschnitt des Befestigungsfingers (5) kreuzförmig ist und die Form der Bohrung (6) der Form nach komplementär ist, wobei die Länge der senkrechten Äste (5A bis 5D) des Kreuzes mindestens teilweise unterschiedlich ist, um eine Codierung und eine Montage der Hülse auf dem Befestigungsfinger in einer genauen, drehfesten Position zu gewährleisten.

2. Vorrichtung nach Anspruch 1, **dadurch gekennzeichnet, dass** die Länge der zwei fluchtenden Äste (5C, 5D) des Kreuzes an dem Ende, das dem freien Ende gegenüberliegt, zunimmt, um Codierungsabschnitte (5'C, 5'D) zu bilden.

3. Vorrichtung nach Anspruch 1 oder 2, **dadurch gekennzeichnet, dass** die Länge (L₁, L₂) der senkrechten Äste des Kreuzes über die gesamte Länge des Befestigungsfingers unterschiedlich ist.

4. Vorrichtung nach dem vorhergehenden Anspruch, **dadurch gekennzeichnet, dass** das Längenverhältnis (L₂/L₁) der senkrechten Äste des Kreuzes ungefähr 1/2 beträgt.

5. Vorrichtung nach Anspruch 3 oder 4, **dadurch gekennzeichnet, dass** die Bohrung (6) der Hülse einen zylindrischen Querschnitt mit einem Durchmesser aufweist, der im Wesentlichen gleich dem Abstand zwischen den Enden der zwei Äste (5C, 5D) der kleineren Länge (L₂) ist, die mit einem ersten Schlitz der Länge (L) verbunden ist, die im Wesentlichen gleich dem Abstand zwischen den Enden der zwei Äste (5A, 5B) der größeren Länge (L₁) ist.

6. Vorrichtung nach dem vorhergehenden Anspruch, **dadurch gekennzeichnet, dass** die Bohrung (6) einen zweiten Schlitz aufweist, der senkrecht zu dem ersten Schlitz und von einer Länge (l) ist, die im Wesentlichen gleich dem Abstand zwischen den Enden der zwei Codierungsabschnitte (5'C, 5'D) der Äste der größeren Länge ist.

7. Vorrichtung nach einem der vorhergehenden Ansprüche, **dadurch gekennzeichnet, dass** das freie Ende des Befestigungsfingers (5) eine ringförmige Rippe (5E) zum Blockieren der Verschiebung der Hülse (4A, 4B) aufweist.

## Claims

1. Windshield wiper device (1) comprising at least one connection for mounting on the body of a motor vehicle, this connection consisting of a fastening element that can be pushed into a receiving opening of the body and comprising a socket (4A, 4B) made of deformable material of rubber type that can be inserted into this opening and comprising a bore (6) receiving the free end of a fastening finger (5) supported by the windshield wiper device, **characterized in that** the external cross section of said fastening finger (5) is in the shape of a cross and the shape of said bore (6) is of complementary shape, the length of the perpendicular branches (5A to 5D) of said cross being at least partially different so as to ensure polarization and mounting of the socket on the fastening finger in a precise position in which rotation is prevented.

2. Device according to Claim 1, **characterized in that** the length of two aligned branches (5C, 5D) of said cross increases at the end opposite to said free end so as to form polarizing portions (5'C, 5'D).

3. Device according to Claim 1 or 2, **characterized in that** the length (L₁, L₂) of the perpendicular branches of said cross is different over the whole length of said fastening finger.

4. Device according to the preceding claim, **characterized in that** the length ratio (L₂/L₁) of the perpendicular branches of said cross is equal to approximately ½.

5. Device according to Claim 3 or 4, **characterized in that** said bore (6) of said socket has a cylindrical cross section with a diameter substantially equal to the distance between the ends of the two branches (5C, 5D) of shorter length (L₂), associated with a first slot with a length (L) substantially equal to the distance between the ends of the two branches (5A, 5B) of greater length (L₁).

6. Device according to the preceding claim, **characterized in that** said bore (6) comprises a second slot perpendicular to the first slot and having a length (1) substantially equal to the distance between the ends of the two polarizing portions (5'C, 5'D) of the branches of greater length.

7. Device according to one of the preceding claims, **characterized in that** said free end of the fastening finger (5) comprises an annular rib (5E) to prevent said socket (4A, 4B) from moving in translation.
